# EUROPÄISCHE PATENTANMELDUNG

(11) **EP 0 802 083 A2**
(43) Veröffentlichungstag der Anmeldung: **22.10.1997**
(21) Anmeldenummer: 97104127.2
(22) Anmeldetag: 12.03.1997
(51) Int. Cl.: B60R 1/06

(54) **Aussen-Rückblickspiegel**

(30) Priorität: 19.04.1996 DE 19615476
(71) Anmelder: REITTER & SCHEFENACKER GmbH & Co. KG, D-73730 Esslingen (DE)
(72) Erfinder: Leonberger, Karl-Heinz, 73269 Hochdorf (DE)
(74) Vertreter: Jackisch-Kohl, Anna-Katharina

(57) **Zusammenfassung**

Der Außenrückblickspiegel ist vorzugsweise für Kraftfahrzeuge vorgesehen. Er weist einen Spiegelfuß (1) und ein Spiegelgehäuse (3) auf, das gegenüber dem Spiegelfuß (1) abklappbar ist. Das Spiegelgehäuse (3) weist eine Spiegelglasträgerplatte auf, die mit einer Verstelleinrichtung (6) einstellbar ist. Sie hat ein vom Fahrzeuginnenraum aus betätigbares Stellelement (7). Damit bei einfacher konstruktiver Ausbildung der Verstelleinrichtung (6) die Spiegelglasträgerplatte nach dem Abklappen des Spiegelgehäuses (3) und dessen Zurückführen in die Gebrauchslage wieder ihre ursprünglich eingestellte Lage einnimmt, weist die Verstelleinrichtung (6) ein spiegelfußseitiges Stellteil (7, 9) auf, das mit einem spiegelgehäuseseitigen Stellteil (13, 19) über eine Achse (11) gelenkig verbunden ist. Sie liegt annähernd in der Klappachse des Spiegelgehäuses (3). Dadurch ist sichergestellt, daß die Spiegelglasträgerplatte ihre eingestellte Lage bezüglich des Spiegelgehäuses (3) beim Abklappen und Zurückklappen in die Gebrauchslage beibehält.

## Beschreibung

Die Erfindung betrifft einen Außenrückblickspiegel für Fahrzeuge, vorzugsweise für Kraftfahrzeuge, nach dem Oberbegriff des Anspruches 1.

Es sind Außenrückblickspiegel bekannt, bei denen beim Abklappen des Spiegelgehäuses infolge eines Schlages die Verstelleinrichtung für die Spiegelglasträgerplatte ausrastet, um die Abklappbewegung des Spiegelgehäuses zu ermöglichen. Beim Zurückklappen des Spiegelgehäuses in die Gebrauchslage besteht dann das Problem, daß die Spiegelglasträgerplatte und die Verstelleinrichtung so miteinander verbunden werden, daß die Spiegelglasträgerplatte wieder ihre ursprüngliche Lage einnimmt.

Der Erfindung liegt die Aufgabe zugrunde, den gattungsgemäßen Außenrückblickspiegel so auszubilden, daß bei einfacher konstruktiver Ausbildung der Verstelleinrichtung gewährleistet ist, daß die Spiegelglasträgerplatte nach dem Abklappen des Spiegelgehäuses und dessen Zurückführen in die Gebrauchslage wieder ihre ursprünglich eingestellte Lage einnimmt.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel rastet die Verstelleinrichtung beim Abklappen des Spiegelgehäuses nicht aus der Spiegelglasträgerplatte aus, sondern bleibt mit ihr verbunden. Die beiden Stellteile der Verstelleinrichtung werden gegeneinander verschwenkt, wenn das Spiegelgehäuse gegenüber dem Spiegelfuß abklappt. Dadurch ist sichergestellt, daß die Spiegelglasträgerplatte ihre eingestellte Lage bezüglich des Spiegelgehäuses beim Abklappen und Zurückklappen in die Gebrauchslage beibehält.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: in Ansicht einen erfindungsgemäßen Außenrückblickspiegel,
- Fig. 2: in schematischer Darstellung eine Verstelleinrichtung für den Spiegelglasträger des erfindungsgemäßen Außenrückblickspiegels in Ansicht,
- Fig. 3: die Verstelleinrichtung gemäß Fig. 2, teilweise in Ansicht und teilweise im Schnitt,
- Fig. 4: eine Draufsicht auf die Verstelleinrichtung des erfindungsgemäßen Außenrückblickspiegels,
- Fig. 5: in einer Darstellung entsprechend Fig. 4 verschiedene Stellungen eines Spiegelglasträgers des erfindungsgemäßen Außenrückblickspiegels,
- Fig. 6: in schematischer Darstellung eine Seitenansicht des Spiegelglasträgers, der zwei unterschiedliche Stellungen einnimmt,
- Fig. 7: in einem Schnitt die Verbindung zwischen einem Spiegelfuß und einem Spiegelgehäuse des erfindungsgemäßen Außenrückblickspiegels,
- Fig. 8: in vergrößerter Darstellung die Verbindungsstelle gemäß Fig. 7,
- Fig. 9: in einer Darstellung entsprechend Fig. 7 eine zweite Ausführungsform eines erfindungsgemäßen Außenrückblickspiegels,
- Fig. 10: in vergrößerter Darstellung einen Schnitt längs der Linie A-A in Fig. 7,
- Fig. 11: in explosiver Darstellung die Verbindungsteile gemäß Fig. 9,
- Fig. 12: eine Draufsicht auf den Verbindungsbereich gemäß Fig. 9,
- Fig. 13: den Verbindungsbereich gemäß Fig. 12, teilweise im Schnitt.

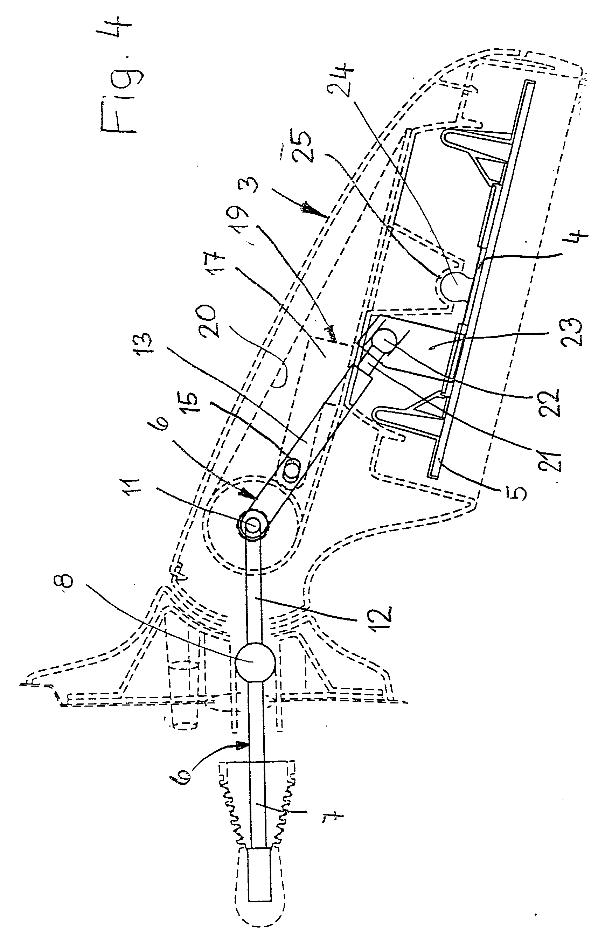

Der Außenrückblickspiegel kann in bekannter Weise an der rechten und an der linken Kraftfahrzeugaußenseite befestigt werden. Er hat einen Spiegelfuß 1, der einen quer abstehenden Tragteil 2 hat, auf dem in noch zu beschreibender Weise ein Spiegelgehäuse 3 um eine aufrechte Achse schwenkbar gelagert ist. Im Spiegelgehäuse 3 ist eine Trägerplatte 4 (Fig. 4) in bekannter Weise verstellbar gelagert, auf der ein Spiegelglas 5 befestigt ist. Wie Fig. 4 zeigt, ist die Trägerplatte 4 kugelgelenkig im Spiegelgehäuse 3 gelagert und kann mit einer Verstelleinrichtung 6 vom Fahrzeuginneren aus in die gewünschte Lage verstellt werden.

Durch den Spiegelfuß 1 ragte in das Kraftfahrzeuginnere ein Stellhebel 7, der innerhalb des Spiegelfußes 1 mittels einer Kugel 8 in bekannter Weise gelagert ist. Über die Kugel 8 ist der Stellhebel 7 starr mit einem U-förmigen Bügel 9 verbunden, dessen an die Kugel 8 anschließender Schenkel 10 innerhalb des Spiegelfußes 1 liegt. Der andere Schenkel 11 des Bügels 9 ragt in das Spiegelgehäuse 3. Beide Schenkel 10, 11 sind durch einen Steg 12 miteinander verbunden, der innerhalb des Tragteiles 2 des Spiegelfußes 1 angeordnet ist. Auf dem freien Ende des Schenkels 11 ist ein Zwischenhebel 13 schwenkbar gelagert, der etwa in halber Länge eine Achse 14 aufweist, die in der Gebrauchslage des Außenrückblickspiegels nach oben und unten über den Zwischenhebel 13 ragt. Die überstehenden Enden dieser in der Gebrauchslage des Außenrückblickspiegels aufrecht stehenden Achse 14 ragen in Langlöcher 15 und 16, die in Schenkein 17 und 18 eines U-förmigen Trägers 19 vorgesehen sind. Der Zwischenhebel 13 ragt zwischen die beiden zueinander parallelen Schenkel 17, 18 des Trägers 19, der fest mit dem Spiegelgehäuse 3 verbunden ist. Die Schenkel 17, 18 erstrecken sich in Richtung auf den Spiegelfuß 3 und liegen unter einem kleinen spitzen Winkel zur Rückseite 20 des Spiegelgehäuses 3 (Fig. 4). Die Langlöcher 15, 16 sind nahe den freien Enden der Schenkel 17, 18 vorgesehen und erstrecken sich in deren Längsrichtung. Die Breite der Langlöcher 15, 16 entspricht dem Durchmesser der Achse 14.

Der Zwischenhebel 13 ist auf seiner vom Spiegelfuß 1 abgewandten Seite mit einem zapfenförmigen Ansatz 21 versehen, der am freien Ende eine Kugel 22 aufweist. Von der Rückseite der Spiegelglasträgerplatte 4 steht, wie Fig. 4 zeigt, ein Lagerteil 23 ab, in dem die Kugel 22 gelenkig gelagert ist. Das Lagerteil 23 liegt mit Abstand zu einer Lagerkugel 24, die zentrisch an der Rückseite der Spiegelglasträgerplatte 4 vorgesehen ist. Die Lagerkugel 24 ist in bekannter Weise in einer Lageraufnahme 25 aufgenommen (Fig. 4), die im Spiegelgehäuse 3 vorgesehen ist.

Wie sich aus Fig. 4 ergibt, liegen der Stellhebel 7 und der Bügel 9 der Verstelleinrichtung 6 in einer gemeinsamen, aufrechten Ebene.

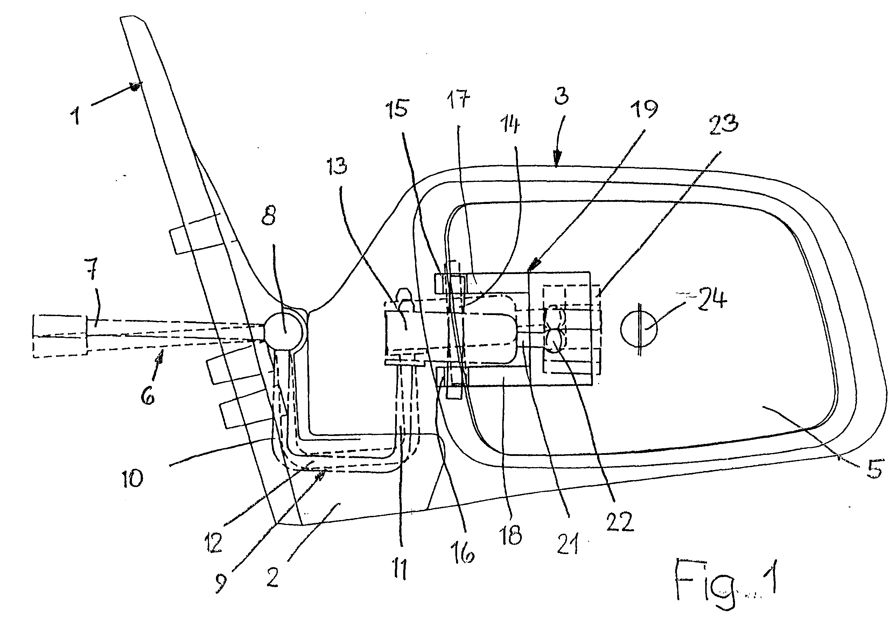

Wird der Stellhebel 7 aus der in Fig. 1 mit ausgezogenen Linien dargestellte Lage in die mit gestrichelten Linien dargestellte Lage geschwenkt, wird der Bügel 9 aufwärts geschwenkt. Da der Zwischenhebel 13 axial fest auf dem Schenkel 11 des Bügels 9 sitzt, wird der Zwischenhebel 13 entsprechend mitgenommen. Die Kugel 22 ist formschlüssig mit dem Lagerteil 23 verbunden. Da die Kugel 22 über den Ansatz 21 starr mit dem Zwischenhebel 13 verbunden ist, wird auf diese Weise über den Lagerteil 23 die Spiegelglasträgerplatte 4 entsprechend geschwenkt. Da die Achse 14 durch die Langlöcher 15, 16 ragt, kann die Achse bei der beschriebenen Verstellbewegung innerhalb der Langlöcher 15, 16 bewegt werden, so daß der beschriebene Verstellvorgang ermöglicht wird. In den beiden in Fig. 1 dargestellten Stellungen liegt der Zwischenhebel 13 jeweils schräg in bezug auf die Schenkel 17, 18 des Trägers 19.

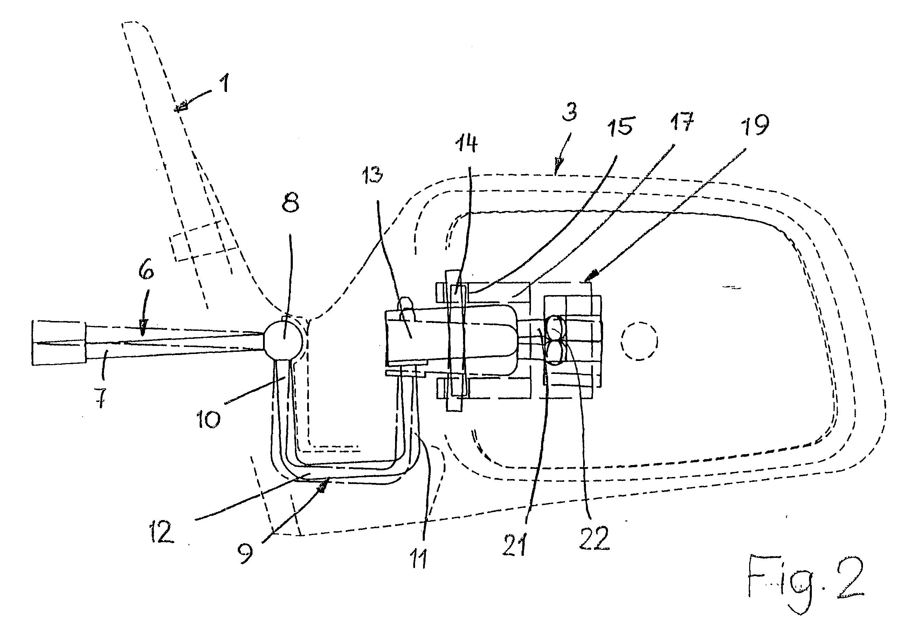

Aus Fig. 2 ergibt sich, daß der Stellhebel 7 auch in umgekehrter Richtung mittels der Lagerkugel 8 in die mit gestrichelten Linien dargestellte Lage im Uhrzeigersinn geschwenkt werden kann. Entsprechend werden der Bügel 9, der Zwischenhebel 13 und die Trägerplatte 4 verstellt.

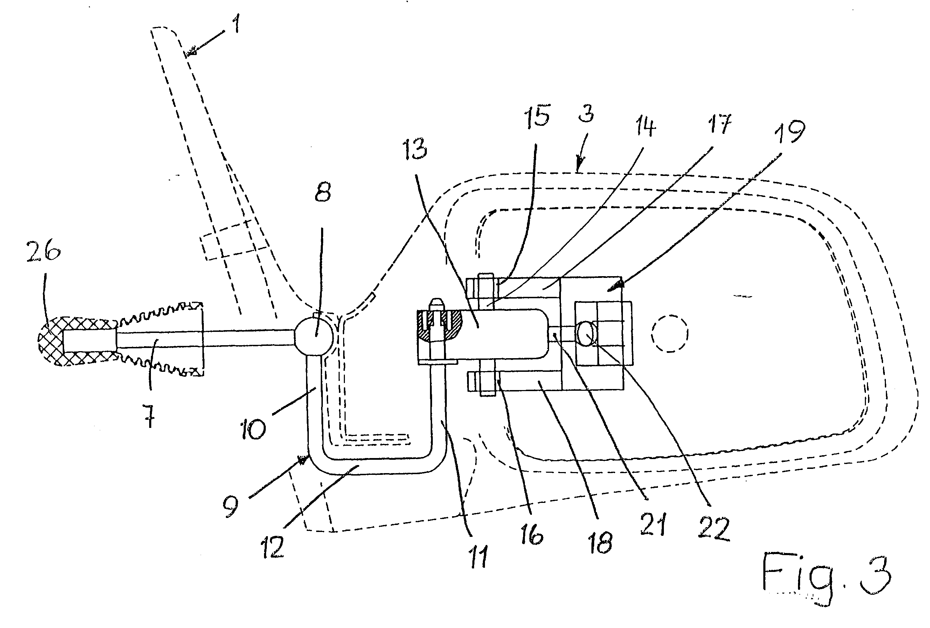

Wie sich aus Fig. 3 ergibt, sitzt auf dem freien Ende des Hebels 7 ein Abdeckteil 26, so daß der Benutzer der Verstelleinrichtung 6 den Stellhebel 7 zuverlässig betätigen kann.

Bei der beschriebenen Verstellung ist der Stellhebel 7 jeweils in vertikaler Richtung geschwenkt worden. Aufgrund der kugelgelenkigen Lagerung mittels der Lagerkugel 8 kann der Stellhebel 7 selbstverständlich in jeder Richtung geschwenkt werden, um die Trägerplatte 4 in die erforderliche Lage zu verstellen.

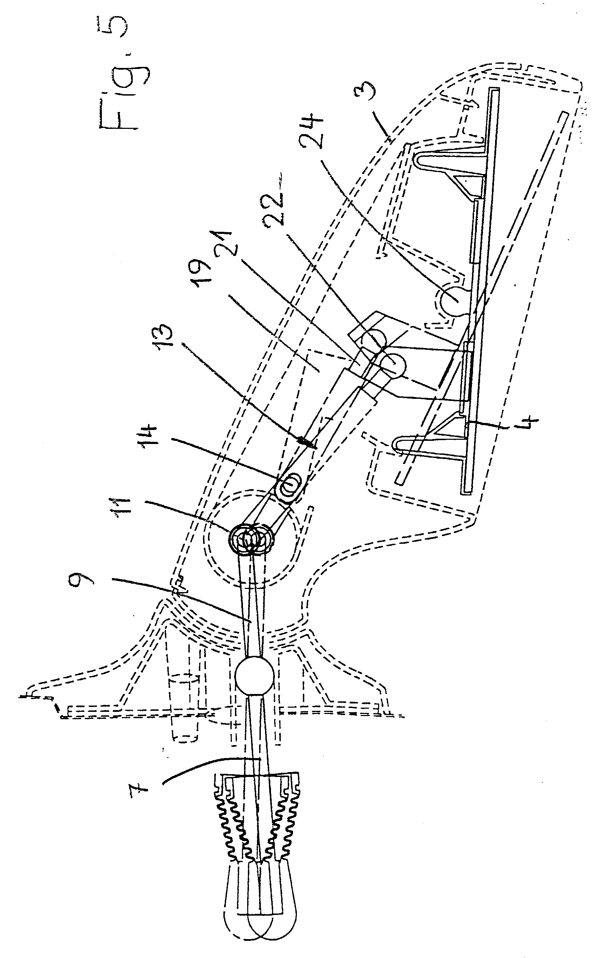

Fig. 5 zeigt die Möglichkeit, den Stellhebel 7 beispielsweise auch in horizontaler Richtung zu verstellen. Wird der Stellhebel 7 aus der mit ausgezogenen Linien dargestellten Lage im Uhrzeigersinn in die mit gestrichelten Linien dargestellte Lage verschwenkt, wird der Zwischenhebel 13 entgegen dem Uhrzeigersinn verschwenkt. In diesem Falle verschiebt sich die Achse 14 des Zwischenhebels 13 nicht in den Langlöchern des Trägers 19, sondern dreht in den Langlöchern um ihre Achse. Über den Ansatz 21 und die Kugel 22 des Zwischenhebels 13 wird die Spiegelglasträgerplatte 4 um ihre kugelgelenkige Lagerung 24 ebenfalls im Uhrzeigersinn verschwenkt. In diesem Falle wird die Trägerplatte 4 um eine gedachte vertikale Achse verstellt.

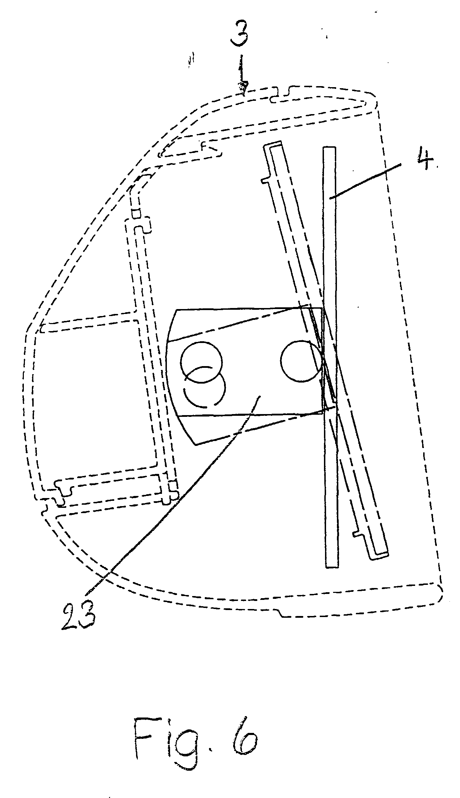

Wird der Stellhebel 7, wie anhand der Fig. 1 und 2 beschrieben worden ist, in vertikaler Richtung bewegt, dann wird auch der Lagerteil 23 an der Rückseite der Trägerplatte 4 in vertikaler Richtung verschwenkt. Dies hat zur Folge, daß die Spiegelglasträgerplatte 4 um eine gedachte horizontale Achse in ihrer Neigung eingestellt wird. In Fig. 6 sind mit ausgezogenen und gestrichelten Linien zwei mögliche Einstellagen der Trägerplatte 4 dargestellt, wenn der Stellhebel 7 in Vertikalrichtung verschwenkt wird.

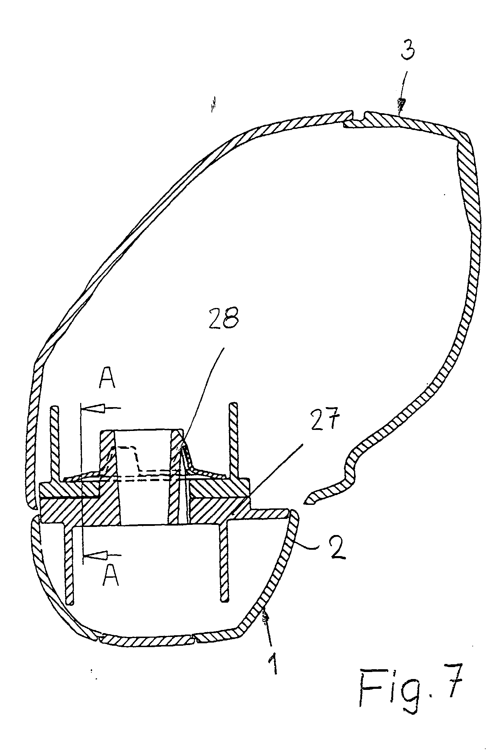

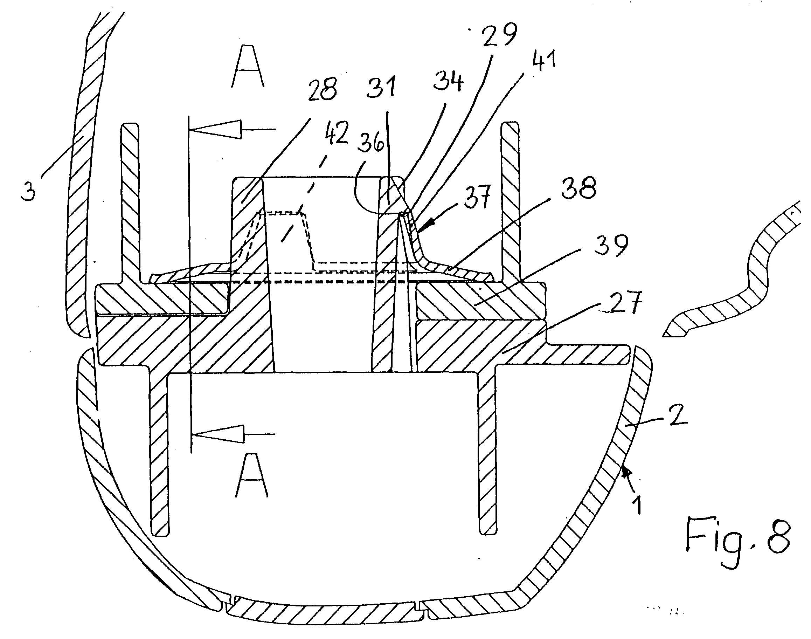

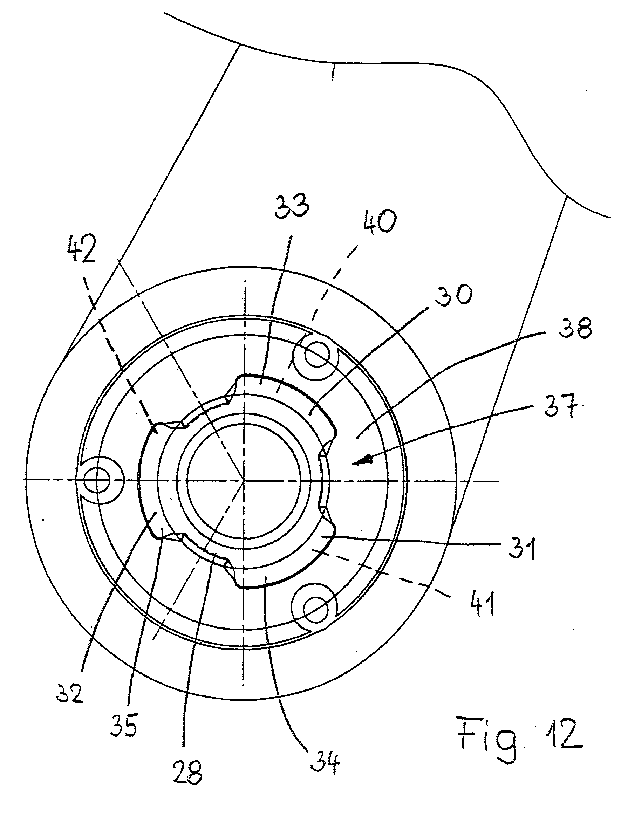

Das Spiegelgehäuse 3 kann gegenüber dem Spiegelfuß 1 bei einem Schlag in und entgegen Fahrtrichtung abklappen. Wie die Fig. 7 und 8 zeigen, ist im Tragteil 2 des Spiegelfußes 1 ein Lagerteil 27 untergebracht, das einen aufwärts gerichteten, nach oben über den Tragteil 2 vorstehenden hülsenförmigen Ansatz 28 aufweist. Er ist am freien Ende mit mindestens einer außenseitigen Hinterschneidung 29 versehen (Fig. 8). Im dargestellten Ausführungsbeispiel sind drei Hinterschneidungen 29 vorgesehen, die über den Umfang des Ansatzes 28 vorzugsweise gleichmäßig verteilt angeordnet sind. Zur Bildung der Hinterschneidungen 29 sind am freien Ende des Ansatzes 28 drei mit Abstand voneinander vorgesehene radiale Ansätze 30 bis 32 vorgesehen (Fig. 12), die jeweils eine auf einem Kegelmantel liegende Fläche 33 bis 35 haben. Sie gehen jeweils spitzwinklig in eine radial zur Achse des Ansatzes 28 liegende Unterseite über, von denen in Fig. 8 die Unterseite 36 des Ansatzes 31 dargestellt ist. Diese Unterseiten 36 bilden die Hinterschneidungen 29. Sie dienen als Widerlager für eine Federscheibe 37, mit welcher das Spiegelgehäuse 3 in noch zu beschreibender Weise reibschlüssig mit dem Spiegelfuß 1 verbunden wird.

Die Federscheibe 37 hat einen konischen Grundkörper 38, dessen umlaufender Rand auf einem Tragteil 39 des Spiegelgehäuses 3 aufliegt. Er sitzt auf dem Lagerteil 27 des Spiegelfußes 1 auf.

Der Grundkörper 38 der Federscheibe 37 verjüngt sich in Richtung auf das freie Ende des Ansatzes 28 des Lager teiles 27. Vom Grundkörper 38 stehen über den Umfang vorzugsweise gleichmäßig verteilt drei Lappen 40 bis 42 schräg nach oben, die mit ihren freien Enden an den Unterseiten 36 der Ansätze 30 bis 32 zur Anlage kommen. Der Grundkörper 38 und die Lappen 40 bis 42 der Federscheibe 37 sind so ausgebildet, daß in der montierten Lage die Federscheibe 37 elastisch vorgespannt ist. Auf diese Weise wird das Spiegelgehäuse 3 mit seinem Tragteil 39 fest gegen den Lagerteil 27 des Spiegelfußes 1 gedrückt.

Wird auf das Spiegelgehäuse 3 ein Schlag in oder entgegen Fahrtrichtung des Kraftfahrzeuges ausgeübt, kann das Spiegelgehäuse 3 um die Achse des Ansatzes 28 des Lagerteiles 27 des Spiegelfußes 1 in der entsprechenden Richtung schwenken. Die Federscheibe 37 bleibt hierbei in ihrer Lage, wobei sich beim Verschwenken der Tragteil 39 des Spiegelgehäuses 3 relativ zur Federscheibe 37 dreht. In der jeweils verschwenkten Lage bleibt das Spiegelgehäuse 3 infolge der beschriebenen Vorspannung mittels der Federscheibe 37 stehen. Bei diesem Schwenkvorgang wird die Spiegelglasträgerplatte 4 nicht relativ zum Spiegelgehäuse 3 verstellt. Wird das Spiegelgehäuse 3 wieder in die Gebrauchslage zurückgeschwenkt, nimmt dadurch die Spiegelglasträgerplatte 4 ihre ursprüngliche Gebrauchslage ein. Dies ist darauf zurückzuführen, daß die Schwenk- bzw. Klappachse des Spiegelgehäuses 3 zumindest annähernd in der Achse des Schenkels 11 des Bügels 9 liegt. Dadurch bleibt beim Abklappen des Spiegelgehäuses 3 der Stellhebel 7 mit dem Bügel 9 in seiner eingestellten Lage stehen, während der Zwischenhebel 13 beim Abklappvorgang relativ zum Bügel 9 verstellt wird. Dadurch bleibt die Spiegelglasträgerplatte 4 in ihrer jeweils eingestellten Lage relativ zum Spiegelgehäuse 3 stehen.

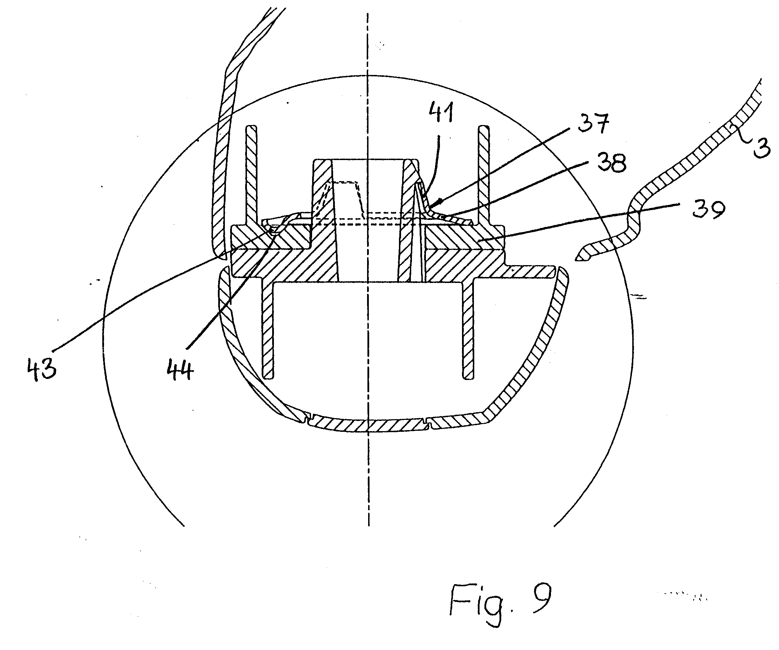

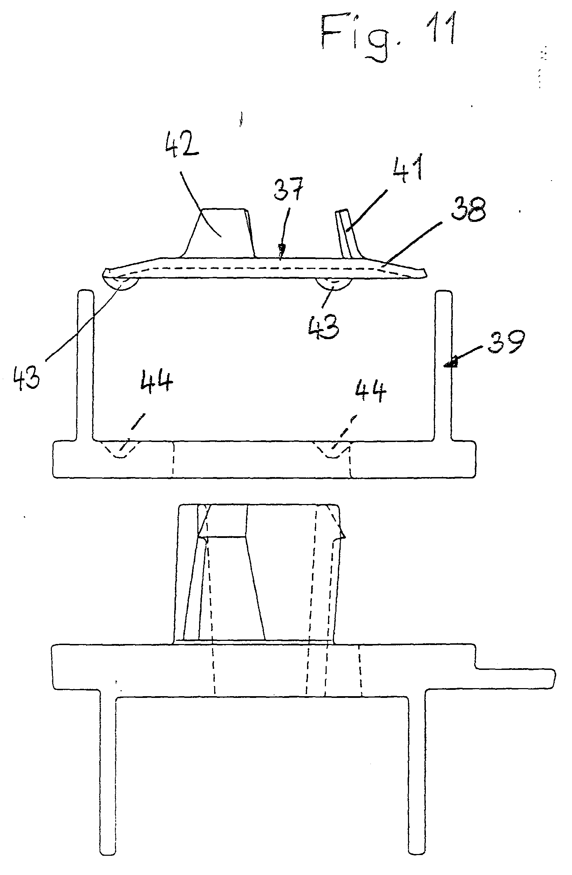

In den Fig. 9 bis 11 ist eine Ausführungsform einer Federscheibe 37 dargestellt, deren Grundkörper 38 entgegengesetzt zu den Lappen 40 bis 42 vorstehende Rastelemente 43 aufweist. Sie greifen in entsprechende Rastvertiefungen 44 des Tragteiles 39 des Spiegelgehäuses 3 ein. Die Rastelemente 43 haben, wie Fig. 11 zeigt, teilkreisförmigen Querschnitt. Vorteilhaft sind sie durch Ausprägungen des Grundkörpers 38 der Federscheibe 37 gebildet. Im übrigen ist die Federscheibe 37 gleich ausgebildet wie beim vorigen Ausführungsbeispiel.

Wird das Spiegelgehäuse 3 in Fahrtrichtung nach vorn oder nach hinten gegenüber dem Spiegelfuß 1 abgeklappt, bewegt sich der Tragteil 39, da er Bestandteil des Spiegelgehäuses 3 ist, relativ zur Federscheibe 37. Die Rastelemente 43 gelangen darum aus den Rastvertiefungen 44. Da die Rastelemente 43 teilkreisförmigen Querschnitt haben, gelangen sie einfach aus den Rastvertiefungen 44. Wird das Spiegelgehäuse 3 wieder in seine Ausgangslage zurückgeschwenkt, rasten die Rastelemente 43 selbsttätig in die Rastvertiefungen 44 ein.

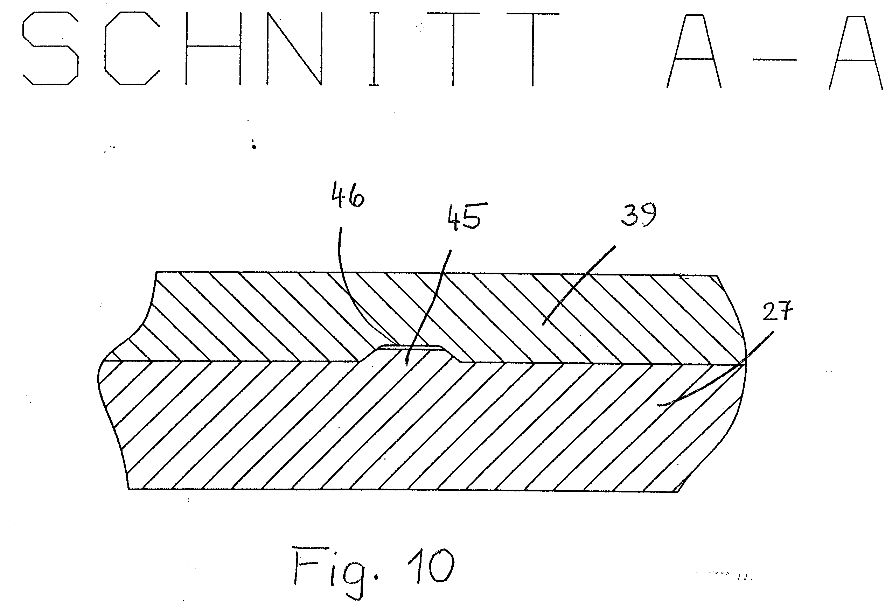

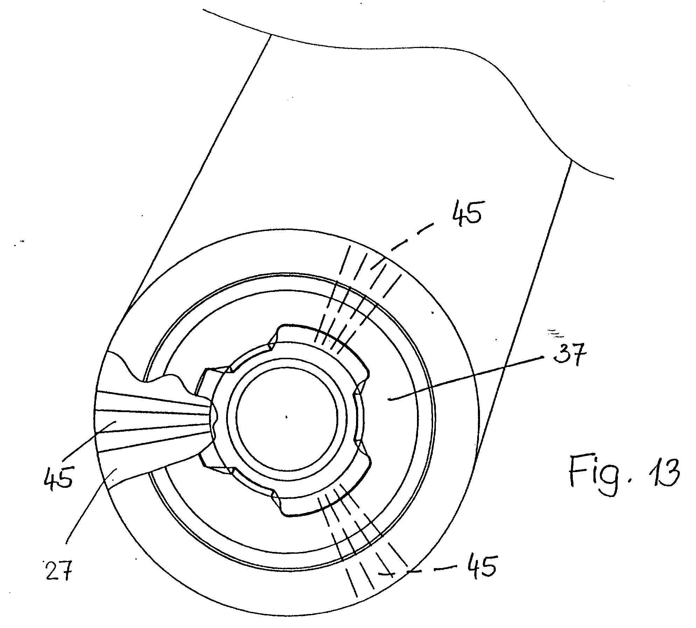

Damit auch bei der Ausführungsform gemäß den Fig. 7, 8 und 12 der Tragteil 39 des Spiegelgehäuses 3 in der Gebrauchslage des Spiegelgehäuses eine definierte Lage einnimmt, ist der Tragteil vorteilhaft mit rippenartigen Erhöhungen 45 versehen (Fig. 10 und 13), die trapezförmigen Querschnitt haben und in entsprechende Vertiefungen 46 im Tragteil 39 des Spiegelgehäuses 3 eingreifen. Wie Fig. 13 zeigt, sind über den Umfang des Lagerteiles 27 vorteilhaft drei derartige Erhöhungen 45 vorgesehen, die jeweils radial verlaufen. Aufgrund des trapezförmigen Querschnittes kann das Tragteil 39 beim Abklappen des Spiegelgehäuses 3 leicht von den Erhöhungen 45 des Lagerteiles 27 freikommen, der bei diesem Abklappvorgang still steht.

Aufgrund der beschriebenen Ausbildung der Federscheibe 37 sind zusätzliche Druckfedern nicht erforderlich. Die Lappen 40 bis 42 der Federscheibe 37 stützen sich an den Ansätzen 30 bis 32 des Ansatzes 28 des Lagerteiles 27 so ab, daß die Federscheibe 37 elastisch vorgespannt ist und auf diese Weise den Tragteil 39 des Spiegelgehäuses 3 fest gegen den Lagerteil 27 des Spiegelfußes 1 drückt.

## Patentansprüche

1. Außenrückblickspiegel für Fahrzeuge, vorzugsweise für Kraftfahrzeuge, mit einem Spiegelfuß und einem Spiegelgehäuse, das gegenüber dem Spiegelfuß abklappbar ist und eine Spiegelglasträgerplatte aufweist, die mit einer Verstelleinrichtung einstellbar ist, die ein vom Fahrzeuginnenraum aus betätigbares Stellelement hat,
dadurch gekennzeichnet, daß die Verstelleinrichtung (6) ein spiegelfußseitiges Stellteil (7, 9) aufweist, das mit einem spiegelgehäuseseitigen Stellteil (13, 19) über eine Achse (11) gelenkig verbunden ist, die zumindest annähernd in der Klappachse des Spiegelgehäuses (3) liegt.

2. Außenrückblickspiegel nach Anspruch 1,
dadurch gekennzeichnet, daß das spiegelfußseitige Stellteil (7, 9) im Spiegelfuß (1) gelenkig gelagert ist und vorzugsweise das als einarmiger Hebel ausgebildete Stellelement (7) aufweist, das mit einem Zwischenelement (9) starr verbunden ist.

3. Außenrückblickspiegel nach Anspruch 2,
dadurch gekennzeichnet, daß das Zwischenelement (9) ein U-förmiger Bügel ist, dessen einer Schenkel (11) die Gelenkachse bildet, und daß vorzugsweise der andere Schenkel (10) des Zwischenelementes (9) mit einer Lagerkugel (8) fest verbunden ist, an der auch das Stellelement (7) befestigt ist, das vorteilhaft mit dem Zwischenelement (9) in einer gemeinsamen Ebene liegt.

4. Außenrückblickspiegel nach einem der Ansprüche 1 bis 3,
dadurch gekennzeichnet, daß das spiegelgehäuseseitige Stellteil (13, 19) ein Stellelement (13) aufweist, das drehbar auf der Gelenkachse (11) des spiegelfußseitigen Stellteiles (7, 9) gelagert ist.

5. Außenrückblickspiegel nach Anspruch 4,
dadurch gekennzeichnet, daß das spiegelgehäuseseitige Stellelement (13) mit einer Achse (14) in einem Träger (19) gelagert ist, der fest mit dem Spiegelgehäuse (3) verbunden ist, und daß vorzugsweise die Achse (14) des Stellelementes (13) quer zu ihrer Achsrichtung begrenzt beweglich im Träger (19) gelagert ist.

6. Außenrückblickspiegel nach Anspruch 5,
dadurch gekennzeichnet, daß der Träger (19) zwei zueinander parallele Schenkel (17, 18) aufweist, die mit jeweils einem Langloch (15, 16) versehen sind, in welche die Achse (14) des spiegelgehäuseseitigen Stellelementes (13) eingreift, das vorzugsweise gelenkig mit der Spiegelglasträgerplatte (4) verbunden ist.

7. Außenrückblickspiegel nach einem der Ansprüche 4 bis 6,
dadurch gekennzeichnet, daß von der Rückseite der Spiegelglasträgerplatte (4) ein Lagerteil (23) absteht, in welches das spiegelgehäuseseitige Stellelement (13) eingreift.

8. Außenrückblickspiegel für Fahrzeuge, vorzugsweise für Kraftfahrzeuge, mit einem Spiegelfuß und einem Spiegelgehäuse, das gegenüber dem Spiegelfuß abklappbar ist, insbesondere nach einem der Ansprüche 1 bis 7,
dadurch gekennzeichnet, daß das Spiegelgehäuse (3) gegen den Spiegelfuß (1) durch wenigstens eine Federscheibe (37) gedrückt ist, die sich unter elastischer Vorspannung spiegelgehäuseseitig und am Spiegelfuß (1) abstützt.

9. Außenrückblickspiegel nach Anspruch 8,
dadurch gekennzeichnet, daß die Federscheibe (37) einen Ansatz (28) des Spiegelfußes (1) umgibt, und daß vorzugsweise das Spiegelgehäuse (3) mit einem Tragteil (39) den Ansatz (28) umgibt, an dem vorteilhaft die Federscheibe (37) abgestützt ist.

10. Außenrückblickspiegel nach Anspruch 9,
dadurch gekennzeichnet, daß der Ansatz (28) mindestens ein Widerlager (30 bis 32) für die Federscheibe (37) aufweist, die vorzugsweise mindestens einen lappenförmigen Ansatz (40 bis 42) aufweist, der sich am Widerlager (30 bis 32) des Ansatzes (28) abstützt.

11. Außenrückblickspiegel nach einem der Ansprüche 8 bis 10,
dadurch gekennzeichnet, daß die Federscheibe (37) mindestens ein Rastelement (43, 46) aufweist, das mit mindestens einem spiegelfußseitigen Rastgegenelement (44, 45) zusammenwirkt.
